# EUROPEAN PATENT APPLICATION

(11) **EP 1 182 234 A1**
(43) Date of publication of application: **27.02.2002**
(21) Application number: 99906266.4
(22) Date of filing: 10.03.1999
(51) Int. Cl.: C09C 1/62

(54) **SILICA AND IRON OXIDE BASED PIGMENTS AND METHOD FOR THE PRODUCTION THEREOF**

(71) Applicant: Itaca, Innovaciones Tecnicas Aplicadas a Ceramicas Avanzadas, S.A., 12191 Puebla Tornesa (ES)
(72) Inventor: BAGAN VARGAS, Vicente, E-12002 Castellon (ES); BLASCO FUENTES, Antonio, E-12004 Castellon (ES); NEGRE MEDALL, Francisco, E-12003 Castellon (ES); BELTRAN PORCAR, Vicente, E-12003 Castellon (ES); CERVANTES RODRIGUEZ, Benito, E-12005 Castellon (ES)
(74) Representative: Elzaburu, Alberto de
(86) International application number: ES9900060
(87) International publication number: WO0053680

(57) **Abstract**

Pigments based on silica and iron oxide and manufacturing process thereof. In order to obtain a pigment of silica-iron oxide, microsilica is blended and/or milled with a source of iron oxide in ratios between 2 and 30 % by weight of iron oxide. With the blending of raw materials a dry agglomerate is obtained that is calcinated at temperatures between 800 and 13001 C, obtaining a product that is milled to obtain a powder of red colour. This colorant can be used in a wide range of uses, for example, added to a standard porcelain stoneware composition, it allows red and orange coloured pieces to be obtained.

## Description

### Field of the Invention

The present invention relates to the technical field of pigment manufacturing. Specifically, it deals with obtaining silica and iron oxide pigments useful in different industries and particularly in the ceramics industry. The silica component of these pigments would be obtained from microsilica or from fumed silica as the most characteristic feature of the invention.

### Description of the state of the art

The natural pigments, silica B iron, have been known since ancient times for their chromophore properties. Extensively used in ceramics for colouring 'the mass, they provide a colour within the range of ochre B browns B oranges B reddish, on being introduced in high ratios which range from 2 to 12% by weight. However, they essentially lack homogeneity due to variations in the physico-chemical characteristics of the deposits.

Several efforts have been carried out trying to reproduce the features of this type of natural colorants, although these efforts have always come up against the limitation of achieving good quality products at a competitive cost relative to the market prices established for naturally occuring products.

In the prior developments there are different attempts to reproduce this type of colorants based on wet reaction processes, obtaining a gel, Fe₂O₃, xSiO₂, with a Fe₂O₃ content of 5 to 15% by weight, which must be submitted to a drying, calcination and milling process in order to obtain the product with an adequate quality.

In US patent 3,005,724 (1961), the starting product is a colloidal silica as a silica source, and a source of iron oxide, preferably iron sulphate, obtaining a suspension which is gelified by the addition of an alkaline solution. This gel is dried and calcinated at temperatures between 900 and 14001 C and afterwards it is milled in order to obtain the pigment.

On the other hand, there are patents in which fumed silica is used to improve the features of the iron oxide synthetic pigments. In these cases, low silica ratios between 0.25 and 10 % of SiO₂ by weight are used, and it is used to improve the flowability and the coloration of the pigments in comparison with the synthetic iron oxides.

US patents 4,221,607 and 4,229,635, are disclosing processes for obtaining this type of iron oxide, starting from a solution of copperas as a source of iron oxide, to which a small proportion of silica is added (between 0.25 and 10% by weight) to obtain the iron oxide pigments with improved properties after a drying and calcination process. In US patent 4,221,607, the addition of silica is carried out before drying and calcination and an iron pigment is obtained which behaves better in the calcination process, while in US patent 4,229,635, the addition of iron is carried out after the calcination process and during a washing process of the colorant, before final drying and milling, obtaining a pigment with improved flowability.

References have not been found to the use of microsilica for the manufacture of silica-iron oxide pigments.

### Brief description of the invention

The object of the present invention was to obtain inorganic pigments of the silica-iron oxide, Fe₂O₃ and SiO₂ system, using microsilica or fumed silica as the silica source, along with the process for industrial obtention of said pigment. The obtained pigments may have a of red B orange hue colouration, above all when used in the manufacture of ceramic products of low porosity such as porcelain stoneware. They are a competitive alternative, in terms of quality and cost, to natural materials such as Thiviers stoneware, which are currently used. The presentation of the product is in the form of a micronised powder. The product can be incorporated into the base composition through a direct dispersion mechanism without the need for milling.

### Detailed description of the invention

The colorants object of the invention consist mainly of mixtures of silicon oxide (silica), in ratios that range between 70 and 98 % by weight, and iron oxide, in different ratios, referred to a mixture of SiO₂ and Fe₂O₃.

This invention uses microsilica or fumed silica as the silicon oxide source. Which is basically obtained as a byproduct by condensation of the gases evolved during the process of manufacturing silicon metal (electric arc melting) and alloys of silicon and other metals. Said product is characterised by its high content in silica (greater than 90 % expressed as SiO₂) and by its extremely fine particle size (around 100 nm).

As a source of iron oxide, red and/or yellow iron oxide (natural and/or synthetic) at ranges between 2 and 30% by weight can be used, or salts and/or complexes of iron that can be oxidised and/or decompose during the calcination process to provide iron oxide.

Small quantities of additive can be added to these basic mixtures to improve the features of the colorant and/or to modify its coloration.

The resulting colorants are pigments of a red-orange colour which can be used for colouring all sorts of materials, preferably ceramic materials, and specially ceramic masses that provide porcelain stoneware type low porosity ceramic materials. Particularly porcelain stoneware which show chromatic coordinates (Hunter-LAB) in the following ranges: L = 36-46, a = 10-18 and b = 7-11 are obtained using those pigments of the invention. The pigments of the invention may be used, alone or in blends with other materials as integrant in the compositions or for the surface decoration of enamels, glasses, ceramics, cements, plastics, laminates, graphic inks and rubber.

Depending on the composition, source of iron oxide, conditions of subsequent firing and treatment to which the colorant is submitted, a wide range of colours can be obtained within the red-orange tones.

In essence, the silica provides a protective coating layer for the iron oxide particles, protecting against external aggressions such as temperature, atmosphere and/or attack by other compounds. This protective layer ensures that the iron oxide processed in this way, remains more stable during its use in ceramic compositions that are submitted to high temperatures during their manufacture.

These colorants of silica-iron are obtained by calcination of mixtures of raw materials at high temperatures, forming a pigment with tridymite and/or crystobalite structure in which the iron oxide is incorporated with hematite structure. The tridymite or crystobalite are formed by calcination of the amorphous silica, obtaining a stable structure or another one, depending on the firing conditions and on the present additives and impurities.

The different compositions of raw material can be prepared through dry or wet processes. In the dry process, the mixture of raw materials is carried out in a mill or a blender. The resulting mixture may optionally be granulated to facilitate its handling (transport, dosing...). In the wet process, a suspension in water of the raw materials is prepared by milling and dispersion, drying the mixture in an atomisation process, in which an agglomerated material suitable for subsequent processing is obtained.

These mixtures of raw materials, more or less agglomerated, may optionally pass through a prior drying stage, to then proceed to calcination (thermal treatment at high temperature in which the different physico-chemical transformations that convert the material into its finished state will take place). Said calcination may be carried out in different oven types at temperatures comprised between 800 and 13001 C, depending on the features of the silica, the source of iron oxide and the used additives, with residence times ranging between 1 and 24h.

In some cases, a prior calcination may be effected, at a lower temperature to suitably prepare the raw materials for their subsequent reaction. In this stage, if necessary, the present organic material and the iron oxide are oxidised and/or the raw material acting as a source of iron oxide is decomposed.

After calcination the product is submitted to a particle size reduction step to provide a more homogeneous colour. Said operation is preferably carried out in a dry milling installation, with dynamic classification which permits to assure that more than 99 % of the particles are smaller than 40 micrometers. The process concludes with final blending with control of the chromaticity coordinates of the obtained pigment and dosing and packaging.

### Examples

### Example 1

87 kg of microsilica and 13 kg of synthetic red iron oxide are milled in a silex-ball mill for 4 hours with 50 litres of water. The suspension obtained is dried and the granulate obtained calcinated at a maximum temperature of 10501 C for three hours. A red coloured product is obtained, which is milled in a mill with alumina balls in dry conditions, until 99 % of the particles are smaller than 40 microns. This colorant, added to a standard composition of porcelain stoneware in a ratio of 5 % by weight, provides fired pieces with Hunter-LAB chromaticity coordinates of L=38.0 a=15.6 b=7.4.

### Example 2

346 kg of microsilica and 72 kg of synthetic red iron oxide are granulated in an intensive granulation machine with 80 litres of water. The granulate obtained is dried and calcinated at 10251 C for 6 hours at this maximum temperature. A reddish coloured product is obtained, which is milled in the same way as example 1. The chromaticity coordinates that are obtained are L=40.3, a=15.0 and b=7.3.

### Example 3

94 kg of microsilica and 6 kg of synthetic red iron oxide are processed in the same way as in example 1. The chromaticity coordinates that are obtained are L=43.5, a=17.2 and b=8.5.

### Example 4

A suspension is prepared with 65.8 kg of microsilica, 34.2 kg of ferrous sulphate (FeSO₄$7H₂O) and 75.0 kg of water in a silex-ball mill. The milling lasts 4 hours. The suspension is dried and a granulate obtained that is pre-calcinated to decompose the sulphates and to oxidise the iron oxide and then the mixture is calcinated at 11001 C. The chromaticity coordinates that are obtained for the fired pieces prepared with 5% by weight of colorant are L.43.0, a=16.6 and b=10.5.

### Description of the figures

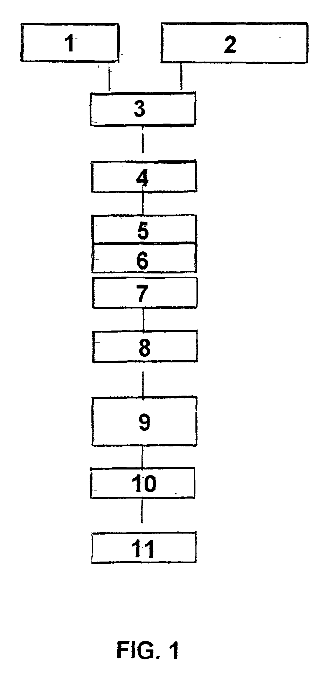

Figure 1. Block diagram of the manufacturing process used.
- 1.: Microsilica
- 2.: Source of iron oxide
- 3.: Milling
- 4.: Agglomeration
- 5.: Pre-calcination
- 6.: Calcination
- 7.: Cooling
- 8.: Blending
- 9.: Dry milling
- 10.: Blending
- 11.: Sacking

## Claims

1. Pigments of silica-iron oxide **characterised in that** the silica component (SiO₂) is obtained from microsilica, having a ratio of silica that ranges between 70 and 98% by weight, while the ratio of iron oxide ranges between 2 and 30% by weight.

2. A process for obtaining pigments of claim 1, **characterised in that** it comprises the following steps:
a) Blending the majority and minority raw materials, containing microsilica and iron oxide
b) Agglomerating of the resulting blend of raw materials from the previous stage
c) Calcinating in an oven the agglomerated blend obtained in the previous stage with a thermal cycle at temperatures comprised between 800 and 1300°C, with residence times ranging between 1 and 24 h,
d) Blending the pigment obtained in the previous calcination step,
e) Reducing the particle size of the obtained blend of pigment,
f) Final blending with control of the chromaticity coordinates of the obtained pigment,
g) Dosing and packaging.

3. A process according to claim 2, in which stages a) and/or b) may be carried out in dry conditions.

4. A process according to claim 2, in which stages a) and/or b) may be carried out in wet conditions.

5. A process according to claims 2 and 3, in which the blend from stage a) is carried out by milling.

6. A process according to claims 2 and 4, in which the mixture from stage a) is carried out by dispersion, preferably in water.

7. A process according to claims 2, 3 and 5, in which the agglomeration of stage b) consists of a granulation.

8. A process according to claims 2, 4 and 6, in which the agglomeration of stage b) consists of drying by atomisation.

9. A process according to claims 2 to 8, in which, before stage c) there is a prior pre-calcination step.

10. A process according to claims 2 to 9, in which, after stage c), there is a cooling step, prior to blending of the resulting pigment.

11. A process according to claims 2 to 10, in which step e) preferably consists of grinding or milling.

12. Pigments obtained according to the process of claims 2 to 11.

13. Use of microsilica as a source of SiO₂ in the manufacture of inorganic pigments and/or colorants.

14. Use of fumed silica as a source of SiO₂ in the manufacture of inorganic pigments and/or colorants.

15. Use according to claims 13 and 14, **characterised in that** the source of silica is obtained from condensation of gases evolved during the manufacture of silicon metal and/or alloys thereof.

16. Use of the pigments of claims 1 or 12, alone or in blends with other materials, as integrants in the compositions of enamels, glasses, ceramics, cements, plastics, laminates, graphic inks and rubber.

17. Use of the pigments of claims 1 or 12, alone or in blends with other materials, in the surface decoration of enamels, glasses, ceramics, cements, plastics, laminates, graphic inks and rubber.

18. A ceramic product **characterised in that** it includes in its composition the pigments of claims 1 or 12.

19. A ceramic product in accordance with claim 18, **characterised in that** it consists of a porcelain stoneware.

20. A porcelain stoneware in accordance with claim 19, **characterised in that** it shows chromatic coordinates (Hunter-LAB) in the following ranges: L = 36-46, a = 10-18 and b = 7- 11, for a percentage pigment of 2% that gives a colour of red-orange tone.
